# EUROPÄISCHE PATENTANMELDUNG

(11) **EP 4 617 526 A1**
(43) Veröffentlichungstag der Anmeldung: **17.09.2025**
(21) Anmeldenummer: 24209197.3
(22) Anmeldetag: 28.10.2024
(51) Int. Cl.: F16H 55/36, F16D 1/06, F16H 55/17

(54) **RIEMENRAD ZUR MONTAGE AN ZWEI VARIANTEN EINES ROHRS UND ZUM ANTRIEB DES ROHRS**

(30) Priorität: 14.03.2024 DE 102024107237
(71) Anmelder: Markes GmbH & Co. Kg, 58553 Halver (DE)
(72) Erfinder: Degen, Thomas, 58553 HALVER (DE)
(74) Vertreter: Staeger & Sperling Partnerschaftsgesellschaft mbB

(57) **Zusammenfassung**

Die Erfindung betrifft ein Riemenrad (10) zur Montage an einem stirnseitigen Endabschnitt (2) eines Rohrs (1), welches in einer ersten Variante zumindest eine stirnseitige Ausklinkung (3) aufweist und welches in einer zweiten Variante frei von stirnseitigen Ausklinkungen (3) ist, wobei das Riemenrad (10) einen Antriebsabschnitt (11), über welchen das Riemenrad (10) um eine Rotationsachse (A) antreibbar ist, und einen in Axialrichtung benachbarten zylindrischen Steckabschnitt (13) aufweist, welcher zum Einstecken in den stirnseitigen Endabschnitt (2) ausgebildet ist, sodass eine Mantelfläche (31) des Steckabschnitts (13) angrenzend an eine Innenfläche (4) des Endabschnitts (2) anordenbar ist, wobei das Riemenrad (10) an seinem Steckabschnitt (13) zumindest ein Federelement (40) aufweist, welches zu einer jeweiligen Ausklinkung (3) korrespondierend ausgebildet ist, wobei das zumindest eine Federelement (40) in einer ausgefederten Primärstellung in Radialrichtung (R) über die Mantelfläche (31) hinausragt und ausgebildet ist, sich in Umfangsrichtung (U) eine Verdrehsicherung bildend an der jeweiligen Ausklinkung (3) abzustützen, und wobei das zumindest eine Federelement (40) in einer eingefederten Sekundärstellung bündig mit der Mantelfläche (31) abschließt.

## Beschreibung

Die Erfindung betrifft ein Riemenrad, welches für die Montage an einem stirnseitigen Endabschnitt zweier verschiedener Varianten eines Rohres geeignet ist und entsprechend beide Varianten des Rohres durch das Riemenrad um eine Rotationsachse antreibbar sind. Dabei weist das Rohr in seiner ersten Variante in seinem Endabschnitt zumindest eine stirnseitige Ausklinkung auf und ist in seiner zweiten Variante frei von solchen stirnseitigen Ausklinkungen.

Riemenräder sind aus dem Stand der Technik bekannt. Diese können beispielsweise zum Antrieb eines Rohres bzw. einer im Endabschnitt als Rohr ausgebildeten Welle verwendet werden.

Weist der stirnseitige Endabschnitt des Rohrs bzw. der Welle Ausklinkungen d.h. nutenförmige und meist in Axialrichtung offene Ausnehmungen auf, besitzt ein hierfür vorgesehenes Riemenrad dazu korrespondierende feste Vorsprünge, welche in die Ausklinkungen eingesteckt werden, sodass diese eine die Kraftübertragung optimierende Verdrehsicherung bilden.

Ist der stirnseitige Endabschnitt des Rohres in einer anderen Variante frei von Ausklinkungen oder weist eine andere Zahl, Verteilung oder Form von Ausklinkungen auf, ist das die Vorsprünge aufweisende Riemenrad nicht verwendbar, sodass im Wesentlichen für jede Variante des Rohrs ein jeweiliges darauf angepasstes Riemenrad bereitgestellt werden muss, was zu einem entsprechenden Variantenreichtum von Riemenrädern mit den damit verbundenen hohen Herstellungs- und Lagerkosten führt.

Der Erfindung liegt deshalb die Aufgabe zugrunde, die vorgenannten Nachteile zu überwinden und ein Riemenrad bereitzustellen, welches zum Antrieb und zur Montage verschiedenster Varianten eines Rohres geeignet ist, wobei sich die Varianten insbesondere durch das Vorhandensein von bzw. die Anzahl von Ausklinkungen an ihrem Endabschnitt unterscheiden.

Diese Aufgabe wird durch die Merkmalskombination gemäß Patentanspruch 1 gelöst.

Erfindungsgemäß wird daher ein Riemenrad zur Montage, insbesondere Steckmontage und weiter insbesondere Einsteckmontage an einem stirnseitigen Endabschnitt eines Rohrs vorgeschlagen, welches in einer ersten Variante in bzw. an seinem Endabschnitt zumindest eine stirnseitige Ausklinkung aufweist und welches in einer zweiten Variante in bzw. an seinem Endabschnitt frei von stirnseitigen Ausklinkungen ist. Wie bereits ausgeführt, wird unter einer Ausklinkung eine vorzugsweise in Axialrichtung offene Ausnehmung verstanden, welche eine Rohrwandung in Dickenrichtung vollständig durchläuft. Klarstellend soll also ein Riemenrad bereitgestellt werden, welches sowohl an einem Rohr mit endseitigen Ausklinkungen als alternativ auch an einem Rohr ohne endseitigen Ausklinkungen montierbar ist, sodass beide Varianten des Rohrs über das Riemenrad antreibbar sind. Hierfür weist das Riemenrad einen Antriebsabschnitt auf, über welchen das Riemenrad um eine Rotationsachse und somit auch das Rohr antreibbar ist. In dem Antriebsabschnitt sind vorzugsweise sich in Umfangsrichtung oder in Axialrichtung erstreckende Rillen oder Nuten zum Antrieb mittels eines Riemens ausgebildet, wobei es sich bei dem Riemen beispielsweise um einen Zahnriemen, einen Keilriemen oder einen anderen zur Kraft- bzw. Bewegungsübertragung geeigneten Riemen handeln kann. Besonders bevorzugt sind in dem Antriebsabschnitt Rillen oder Nuten ausgebildet, welche zu einem zum Anmeldezeitpunkt unter dem Namen Poly-V-Riemen bekannten Riemen korrespondieren. Das Riemenrad ist über seinen Antriebsabschnitt also bevorzugt mittels eines solchen Poly-V-Riemens antreibbar. In Axialrichtung d.h. entlang der Rotationsachse benachbart zu dem Antriebsabschnitt weist das Riemenrad ferner einen zylindrischen und vorzugsweise zu der Rotationsachse konzentrischen Steckabschnitt auf, welcher zum Einstecken und vorzugsweise zum Einpressen in den stirnseitigen Endabschnitt ausgebildet ist, sodass eine Mantelfläche des Steckabschnitts angrenzend an eine Innenfläche des Endabschnitts anordenbar und an dieser durch das Einstecken bzw. Einpressen insbesondere zur Anlage bringbar ist. Abhängig von einer gegebenenfalls herzustellenden Presspassung kann ein Außendurchmesser des zylindrischen Steckabschnitts entsprechend korrespondierend zu einem Innendurchmesser des Endabschnitts ausgebildet sein. Ergänzend ist darauf hinzuweisen, dass nicht zwingend eine Presspassung hergestellt bzw. die Montage nicht durch Einpressen erfolgen muss. Alternativ kann das Riemenrad beispielsweise in den Endabschnitt eingesteckt und der Endabschnitt anschließend seinen Durchmesser reduzierend umgeformt werden. Erfindungsgemäß ist vorgesehen, dass das Riemenrad an seinem Steckabschnitt zumindest ein Federelement aufweist, welches zu einer jeweiligen Ausklinkung bzw. zu den Ausklinkungen korrespondierend ausgebildet ist. Entsprechend kann eine Breite des Federelements in Umfangsrichtung einer Breite der Ausklinkung in Umfangsrichtung entsprechen oder innerhalb einer vorbestimmten Toleranz kleiner als diese sein. In einer als Grundstellung bezeichenbaren bzw. als Grundstellung dienenden ausgefederten Primärstellung ragt das zumindest eine Federelement in Radialrichtung über die Mantelfläche hinaus und ist ausgebildet, sich bei einem Eingreifen in eine Ausklinkung in Umfangsrichtung und insbesondere beidseitig in Umfangsrichtung an der jeweiligen Ausklinkung abzustützen, sodass das Federelement eine Verdrehsicherung bildet, durch welche die Position des Riemenrads in dem Rohr in Umfangsrichtung fixiert und eine Kraftübertragung zwischen Riemenrad und Rohr optimiert wird. Weiter schließt das zumindest eine Federelement in einer eingefederten Sekundärstellung vorzugsweise bündig mit der Mantelfläche ab, steht also in Radialrichtung nicht übe die Mantelfläche hinaus, sodass das zumindest eine Federelement beim Einstecken des Riemenrads in den Endabschnitt einer von Ausklinkungen freien Variante in die Sekundärstellung einfedert bzw. bringbar ist und das Einstecken in einen von Ausklinkungen freie Variante des Rohres nicht behindert wird.

Grundsätzlich gilt, dass vorzugsweise je Ausklinkung ein Federelement vorgesehen ist. Dies ist jedoch nicht zwingend. Beispielsweise kann eine feste, vorbestimmte Anzahl an Federelementen vorgesehen sein, sodass beim Einstecken des Riemenrads in einen Endabschnitt mit weniger Ausklinkungen, nicht in Ausklinkungen eingreifende Federelemente in ihre Sekundärposition eingefedert werden.

Weiter können alle Ausklinkungen sowie alle Federelemente gleichartig ausgebildet sein.

Gemäß einer vorteilhafte Ausführungsform ist zudem vorgesehen, dass das Riemenrad in Axialrichtung zwischen dem Antriebsabschnitt und dem Steckabschnitt einen Kragenabschnitt ausbildet, welcher in Radialrichtung über die Mantelfläche des Steckabschnitts hinausragt und in Richtung des Steckabschnitts einen Axialanschlag zur axialen Anlage an dem Endabschnitt und zur axialen Positionierung des Steckabschnitts in dem Endabschnitt bildet.

Vorzugsweise ist ein maximaler Außendurchmesser des Kragenabschnitts größer als ein maximaler Innendurchmesser des Rohres an seinem Endabschnitt und zugleich gleich oder kleiner einem maximalen Außendurchmesser des Rohres an seinem stirnseitigen Endabschnitt.

Weiter ist vorzugsweise vorgesehen, dass eine Mantelfläche des Kragenabschnitts ausgebildet ist, sprungfrei in eine Außenfläche des Rohres bzw. des Endabschnitts überzugehen.

Hinsichtlich einer beispielsweise durch Rollen oder Bördeln erfolgenden, den Durchmesser an der Stirnseite reduzierenden Umformung des Rohres nach dem Einstecken des Riemenrads, kann zudem vorgesehen sein, dass ein maximaler Außendurchmesser des Kragenabschnitts gleich dem durch Umformen reduzierten Außendurchmesser an der Stirnseite des Rohres ist, sodass ein bündiger und sprungfreier Übergang herstellbar ist.

Vorzugsweise wird durch das Riemenrad in dem Steckabschnitt insbesondere je Federelement eine das jeweilige Federelement abschnittsweise umgebende Tasche ausgebildet, welche einen insbesondere ausschließlich nach radialaußen offenen Aufnahmeraum zur Aufnahme des jeweiligen Federelements in der Sekundärstellung bildet, sodass also das jeweilige Federelement in die Tasche einfedern kann, nach radialinnen jedoch keine Verbindung zu einem im Weiteren noch erläuterten Aufnahmeraum eines hohlzylindrisch ausgebildeten Riemenrads besteht, sodass in den Aufnahmeraum entsprechend auch keine Fremdkörper oder Flüssigkeiten eindringen können.

Vorzugsweise grenzt die zumindest eine Tasche und der jeweils dadurch gebildete Aufnahmeraum unmittelbar an den Kragenabschnitt an, wobei auch das Federelement sich bis an den Kragenabschnitt erstrecken kann.

Alternativ kann jedoch auch vorgesehen sein, dass die zumindest eine Tasche mit dem zugehörigen Federelement in Axialrichtung zu dem Kragenabschnitt beabstandet ist. Ist die zumindest eine Ausklinkung nicht als eine stirnseitig offene Ausnehmung, sondern beispielsweise als ein in Axialrichtung abgeschlossenes Loch bzw. Langloch ausgebildet, kann das zumindest eine Federelement nicht nur als Verdrehsicherung dienen, sondern zugleich als Rastelement vorgesehen sein, welches ausgebildet ist, in ein solches Loch bzw. Langloch einzurasten. Durch das Einrasten in das Loch bzw. Langloch kann das Riemenrad in Axialrichtung zusätzlich in dem Rohr bzw. Endabschnitt gegen eine nicht gewollte axiale Verschiebung gesichert werden.

Vorzugsweise ist das zumindest eine Federelement ausgebildet, in seiner Primärstellung in Radialrichtung bündig mit einer Mantelfläche des Kragenabschnitts abzuschließen, sodass das zumindest eine Federelement also in Radialrichtung nicht über dieses hinaussteht. Alternativ hierzu kann auch vorgesehen sein, dass das zumindest eine Federelement in seiner Primärstellung in Radialrichtung vollständig hinter der Mantelfläche des Kragenabschnitts liegt, sodass das Federelement auch bei dieser Variante in Radialrichtung nicht über den Kragenabschnitt hinaussteht.

Insbesondere in Hinblick auf eine den Außendurchmesser des Endabschnitts bzw. der Stirnseite des Rohres reduzierende Umformung sieht eine vorteilhafte Ausgestaltung der Erfindung vor, dass die Mantelfläche des Steckabschnitts vorzugsweise unmittelbar angrenzend an den Kragenabschnitt einen radialen Rücksprung bzw. eine radiale Ausnehmung aufweist, welcher bzw. welche die Rotationsachse in Umfangsrichtung vorzugsweise vollständig umläuft und ausgebildet ist, ein nach dem Einstecken des Riemenrads in den Endabschnitt nach radialinnen verformtes bzw. umgeformtes und beispielsweise durch Bördeln stirnseitiges Ende des Endabschnitts aufzunehmen, wodurch eine kraft- und/oder formschlüssige Verbindung zwischen Rohr und Riemenrad herstellbar ist.

Weiter sind an dem Steckabschnitt eine Vielzahl von Federelementen bzw. zumindest zwei Federelemente vorgesehen, welche in Umfangsrichtung um die Rotationsachse gleichmäßig d.h. mit in Umfangrichtung gleichem Abstand zueinander oder regelmäßig verteilt sind. Dabei muss eine regelmäßige Verteilung nicht zwingend einer gleichmäßigen Verteilung entsprechen. Beispielsweise kann der Abstand zwischen den Federelementen derart unterschiedlich gewählt sein, dass eine vorbestimmte Asymmetrie und Kodierung erzeugt wird.

Ferner ist vorzugsweise vorgesehen, dass je zwei Federelemente der Vielzahl von Federelemente zueinander um die Rotationsachse um insbesondere 180° versetzt angeordnet sind, wodurch die Kraftübertragung weiter optimiert ist.

Obgleich ein mehrteiliger Aufbau des hohlzylindrischen Riemenrads vorgesehen sein kann, bei welchem beispielsweise das zumindest eine Federelement jeweils durch einen federelastischen Federkörper und einen von diesem gefederten Element gebildet ist, ist vorzugsweise vorgesehen, dass das Riemenrad einteilig und weiter vorzugsweise einstückig ausgebildete ist.

Hierbei kann das zumindest eine Federelement beispielsweise als Federarm vorgesehen sein. Dieser weist in Axialrichtung zu dem Antriebsabschnitt ein freies Ende und in eine entgegengesetzte Axialrichtung einen Anbindungsabschnitt auf, an welchem das jeweilige Federelement insbesondere stoffschlüssig mit einer die Mantelfläche bestimmenden Wandung des Steckabschnitts verbunden ist.

Um das Riemenrad möglichst ohne zusätzlichen Widerstand in den Endabschnitt des Rohres einführen zu können, kann das zumindest eine Federelement an seinem Anbindungsabschnitt sprungfrei in die Wandung des Steckabschnitts übergehen. Zusätzlich oder alternativ kann das zumindest eine Federelement von seinem Anbindungsabschnitt zu seinem freien Ende nach radialaußen eine vorbestimmte Führungsfläche bilden, durch welche das Federelement beim Einstecken des Riemenrads in den Endabschnitt des Rohres mit einer vorbestimmten Kraft und/oder entlang eines vorbestimmten Federweges von der Primärstellung in die Sekundärstellung bringbar ist.

Wie bereits erläutert, kann das Riemenrad hohlzylindrisch sein, wobei ferner vorgesehen sein kann, dass das Riemenrad in Axialrichtung zumindest einseitig offen ausgebildet ist. In seinem Inneren bildet das Riemenrad einen sich vorzugsweise über die im Wesentlichen gesamte Axiallänge erstreckenden Aufnahmeraum zur Aufnahme eines Radiallagers, durch welches das Riemenrad mit dem daran montierten bzw. fixierten Rohr an einer Achse lagerbar und um die Achse antreibbar ist. Der Aufnahmeraum wird durch das Riemenrad nach radialaußen vollständig geschlossen, sodass also in Radialrichtung keine Fremdkörper oder Flüssigkeiten eindringen können.

Das zumindest eine offene Ende des Riemenrads kann zudem durch eine Dichtung und insbesondere durch eine Dichtkappe mit daran ausgebildetem Dichtelement, wie beispielsweise einer Labyrinthdichtung verschlossen und insbesondere gegenüber der Achse verschlossen sein, sodass ein Eindringen von Fremdkörpern, d.h. insbesondere Schmutz, verhindert oder zumindest erschwert ist.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine perspektivische Darstellung eines Endabschnitts eines stirnseitig Ausklinkungen aufweisenden Rohres mit darin eingeschobenen Riemenrad;
- Fig. 2: eine Schnittdarstellung durch einen Endabschnitt eines stirnseitig Ausklinkungen aufweisenden Rohres mit darin eingeschobenen Riemenrad;
- Fig. 3: eine Schnittdarstellung durch einen Endabschnitt eines stirnseitig von Ausklinkungen freien Rohres mit darin eingeschobenen Riemenrad.

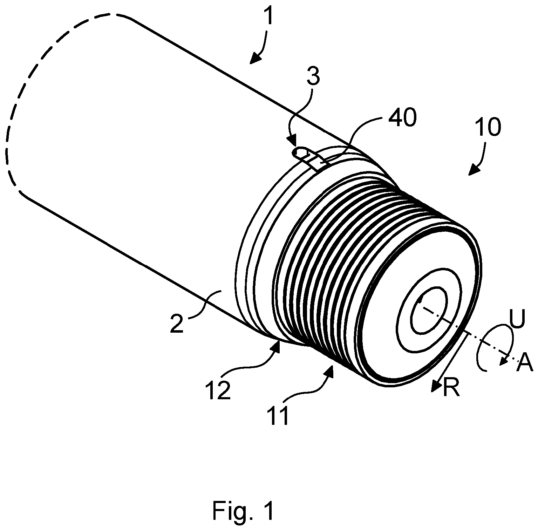

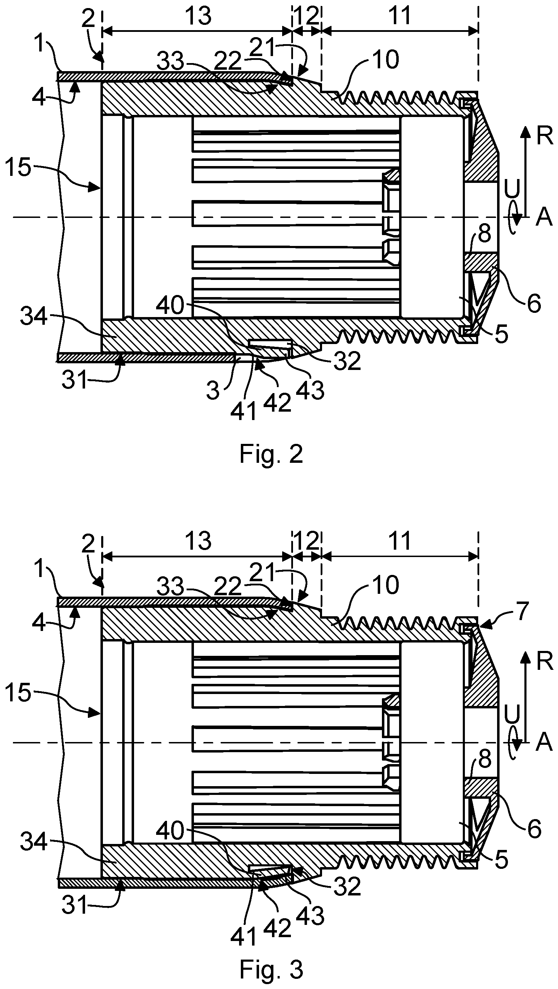

Die Figuren sind beispielhaft schematisch. Gleiche Bezugszeichen in den Figuren weisen auf gleiche funktionale und/oder strukturelle Merkmale hin. Bei der in Figur 1 dargestellten Einheit aus Rohr 1 und Riemenrad 10 kann es sich insbesondere um die Einheit aus Rohr 1 und Riemenrad 10 gemäß Figur 2 handeln. Das Riemenrad 10 gemäß den Figuren 1 bis 3 ist weiter vorzugsweise identisch oder zumindest identisch ausgebildet.

Ein Hauptgedanke der Erfindung ist es, ein Riemenrad 10 bereitzustellen, welches sowohl in einen Endabschnitt 2 eines Rohres 1 mit stirnseitigen Ausklinkungen 3 als auch in einen Endabschnitt 2 eines Rohres 1 ohne stirnseitige Ausklinkungen 3 einsteckbar ist, sodass das jeweilige Rohr 1 von dem Riemenrad 10 in Umfangrichtung U um eine Rotationsachse A antreibbar ist.

Hierfür ist das in den Figuren 1 bis 3 dargestellte Riemenrad 10 in Axialrichtung d.h. entlang der Rotationsachse im Wesentlichen in drei Abschnitte geteilt. Zwischen einem Antriebsabschnitt 11 an einer von dem Rohr 1 abgewandten Seite des Riemenrads 10 und einem in den Figuren 1 bis 3 innerhalb des Rohres 1 angeordneten und in Figur 1 nicht sichtbaren Steckabschnitt 13 ist ein Kragenabschnitt 12 vorgesehen, an welchem zu dem Steckabschnitt 13 hin ein Axialanschlag 22 ausgebildet ist, welcher einen axialen Anschlag für die Stirnseite des Rohres 1 bildet und dadurch die axiale Position des Riemenrads 10 bzw. dessen Steckabschnitt 13 in dem Rohr 1 bestimmt.

Das Riemenrad 10 weist in seinem Steckabschnitt 13 mehrere und vorliegend beispielhaft zwei gegenüberliegende bzw. bezüglich der Rotationsachse A zueinander um 180° versetzte Federelemente 40 auf, von welchen aufgrund der gewählten Darstellung und des jeweiligen Schnittverlaufs in den Figuren 1 bis 3 lediglich ein Federelement 40 sichtbar ist.

Wird ein erfindungsgemäß ausgebildetes Riemenrad 10 in einen stirnseitigen Endabschnitt 2 eines Rohres 1 oder einer im Endabschnitt 2 als Rohr 1 ausgebildeten Welle eingesteckt und weist dieser stirnseitig Ausklinkungen 3 auf, wie es in Figur 2 dargestellt ist, werden die Federelemente 40 unmittelbar oder gegebenenfalls mittels einer zusätzlichen Drehung des Riemenrads 10 in Umfangsrichtung U relativ zu dem Rohr 1 in die Ausklinkungen 3 geführt, sodass sich die Federelemente 40 in ihrer in den Figuren 1 und 2 dargestellten ausgefederten Primär- bzw. Grundstellung in Umfangsrichtung U an der jeweiligen Ausklinkung 3 und genauer an einer die Ausklinkungen 3 begrenzenden Wandung des Rohres 1 abstützen und eine Verdrehsicherung bilden, wodurch bei einem Antrieb des Rohres 1 um die Rotationsachse A über das Riemenrad 10 ein Drehmoment bzw. eine Kraft in vorteilhafter Weise über die Federelemente 40 auf das Rohr 1 übertragen werden kann.

Soll das erfindungsgemäß ausgebildete Riemenrad 10 in ein Rohr 1 ohne stirnseitige Ausklinkungen 3 eingesteckt werden, wie es in Figur 3 dargestellt ist, werden die Federelemente 40 beim Einschieben des Steckabschnitts 13 in das Rohr 1 von dem Rohr 1 aus ihrer Primärstellung in eine eingefederte Sekundärstellung gebracht, in welcher die Federelemente 40 vollständig in einen um sie ausgebildeten Aufnahmeraum 32 eintauchen.

Unabhängig von einer Variante des Rohrs 1 gemäß Figur 2 oder einer Variante des Rohrs 1 gemäß Figur 3 kann das Riemenrad 10 in das jeweilige Rohr 1 eingepresst werden, sodass also eine Mantelfläche 31 des Steckabschnitts 13 unmittelbar gegen eine Innenfläche 4 des Rohrs 1 gepresst und eine entsprechende Verbindung hergestellt ist.

Um das jeweilige Rohr 1 dauerhaft an dem Riemenrad 10 bzw. das Riemenrad 10 dauerhaft an dem Rohr 1 fixieren zu können, ist zudem vorgesehen, dass die Mantelfläche 31 unmittelbar angrenzend an den Kragenabschnitt 12 einen in Umfangsrichtung U die Rotationsachse A vollständig umlaufenden Rücksprung 33 ausbildet, in welche das Rohr 1 bzw. das stirnseitige Ende des Rohres 1 hinein verformt und beispielsweise gebördelt werden kann, sodass Rohr 1 und Riemenrad 10 dauerhaft verbunden sind, wie es auch in den Figuren 1 bis 3 dargestellt ist. Klarstellend wird das Riemenrad 10 zunächst in ein Rohr 1 bzw. dessen Endabschnitt 2 eingeführt, dessen stirnseitiges Ende noch nicht seinen Innendurchmesser reduzierend verformt wurde.

Bezüglich des Federelements 40 ist vorteilhaft, dass dessen freies Ende 43 in der Primärstellung des Federelements 40 in Radialrichtung R bündig mit einer Mantelfläche 21 des Kragenabschnitts 12 abschließt, d.h. in Radialrichtung R nicht über die Mantelfläche 21 des Kragenabschnitts 12 hinaussteht, sodass das Federelement 40 auch in seiner Primärstellung kein eine Rotation behinderndes Hindernis bildet.

An seinem dem freien Ende 43 gegenüberliegenden Anbindungsabschnitt 11 geht das Federelement 40 stoffschlüssig in eine Wandung 34 des Steckabschnitts 13 und sprungfrei in die durch die Wandung 34 bestimmte Mantelfläche 31 des Steckabschnitts 13 über.

Um die Federelemente 40 nicht versehentlich, sondern erst ab und mit einer vorbestimmten Kraft aus der Primärstellung in die Sekundärstellung überführen zu können, ist radialaußen von dem Anbindungsabschnitt 41 ausgehend und sich in Richtung des freien Endes 43 erstreckend eine Führungsfläche 42 vorgesehen, durch welche die hierfür notwendige Kraft vorgegeben ist.

Das Riemenrad 10 ist, wie insbesondere in den Figuren 2 und 3 zu erkennen, hohlzylindrisch ausgebildet, sodass in einem in Axialrichtung beidseitig offenen Aufnahmeraum 15 ein Radiallager 5 anordenbar ist. Mittels des Radiallagers 5 kann das Riemenrad 10 an einer nicht dargestellten Welle um die Rotationsachse A rotierbar gelagert werden.

An einer von dem Rohr 1 abgewandten Seite des Riemenrads 10 bzw. an dem durch den Antriebsabschnitt 11 gebildeten Stirnseite des Riemenrads 10 ist der Aufnahmeraum 15 durch eine Abdeck- bzw. Dichtkappe 6 verschlossen, welche radialaußen gemeinsam mit dem stirnseitigen Ende des Riemenrads 10 eine Labyrinthdichtung 7 bildet. Radialinnen erstreckt sich ein hülsenartiger Fortsatz 8 in den Aufnahmeraum 15 und vorzugsweise in das Radiallager 5 hinein, sodass das Radiallager 5 nicht unmittelbar, sondern über den hülsenartigen Fortsatz 8 an der Welle lagerbar ist.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Riemenrad (10) zur Montage an einem stirnseitigen Endabschnitt (2) eines Rohrs (1), welches in einer ersten Variante zumindest eine stirnseitige Ausklinkung (3) aufweist und welches in einer zweiten Variante frei von stirnseitigen Ausklinkungen (3) ist,
wobei das Riemenrad (10) einen Antriebsabschnitt (11), über welchen das Riemenrad (10) um eine Rotationsachse (A) antreibbar ist, und einen in Axialrichtung benachbarten zylindrischen Steckabschnitt (13) aufweist, welcher zum Einstecken in den stirnseitigen Endabschnitt (2) ausgebildet ist, sodass eine Mantelfläche (31) des Steckabschnitts (13) angrenzend an eine Innenfläche (4) des Endabschnitts (2) anordenbar ist,
**dadurch gekennzeichnet, dass** das Riemenrad (10) an seinem Steckabschnitt (13) zumindest ein Federelement (40) aufweist, welches zu einer jeweiligen Ausklinkung (3) korrespondierend ausgebildet ist,
wobei das zumindest eine Federelement (40) in einer ausgefederten Primärstellung in Radialrichtung (R) über die Mantelfläche (31) hinausragt und ausgebildet ist, sich in Umfangsrichtung (U) eine Verdrehsicherung bildend an der jeweiligen Ausklinkung (3) abzustützen,
und wobei das zumindest eine Federelement (40) in einer eingefederten Sekundärstellung bündig mit der Mantelfläche (31) abschließt.

2. Riemenrad gemäß Anspruch 1,
wobei in Axialrichtung zwischen dem Antriebsabschnitt (11) und dem Steckabschnitt (13) ein Kragenabschnitt (12) ausgebildet ist, welcher in Radialrichtung (R) über die Mantelfläche (31) des Steckabschnitts (13) hinausragt und in Richtung des Steckabschnitts (13) einen Axialanschlag (22) zur axialen Anlage an dem Endabschnitt (2) und axialen Positionierung des Steckabschnitts (13) in dem Endabschnitt (2) bildet.

3. Riemenrad gemäß Anspruch 1 oder 2,
wobei in dem Steckabschnitt (13) insbesondere je Federelement (40) eine das jeweilige Federelement (40) abschnittsweise umgebende Tasche (32) ausgebildet ist, welche einen insbesondere ausschließlich nach radialaußen offenen Aufnahmeraum zur Aufnahme des jeweiligen Federelements (40) in der Sekundärstellung bildet.

4. Riemenrad gemäß Anspruch 2 und 3,
wobei die zumindest eine Tasche (32) und der jeweils dadurch gebildete Aufnahmeraum unmittelbar an den Kragenabschnitt (12) angrenzt.

5. Riemenrad gemäß einem der Ansprüche 2 bis 4,
wobei das zumindest eine Federelement (40) in seiner Primärstellung in Radialrichtung (R) bündig mit einer Mantelfläche (21) des Kragenabschnitts (12) abschließt
oder wobei das zumindest eine Federelement (40) in seiner Primärstellung in Radialrichtung (R) vollständig hinter der Mantelfläche (21) des Kragenabschnitts (12) liegt.

6. Riemenrad gemäß einem der Ansprüche 2 bis 5,
wobei die Mantelfläche (31) des Steckabschnitts (13) insbesondere unmittelbar angrenzend an den Kragenabschnitt (12) einen radialen Rücksprung (33) aufweist, welcher ausgebildet ist, ein nach dem Einstecken des Riemenrads (10) in den Endabschnitt (2) nach radialinnen verformtes stirnseitiges Ende des Endabschnitts (2) aufzunehmen.

7. Riemenrad nach einem der vorhergehenden Ansprüche,
wobei an dem Steckabschnitt (13) eine Vielzahl von Federelementen (40) vorgesehen sind, welche in Umfangsrichtung (U) um die Rotationsachse (A) gleichmäßig oder regelmäßig verteilt sind,
wobei zwei Federelemente (40) der Vielzahl von Federelemente (40) zueinander um die Rotationsachse (A) um insbesondere 180° versetzt angeordnet sind.

8. Riemenrad nach einem der vorhergehenden Ansprüche,
wobei das zumindest eine Federelement (40) in Axialrichtung zu dem Antriebsabschnitt (11) ein freies Ende (43) und in eine entgegengesetzte Axialrichtung einen Anbindungsabschnitt (41) aufweist, an welchem das jeweilige Federelement (40) insbesondere stoffschlüssig mit einer die Mantelfläche (31) des Steckabschnitts (13) bestimmenden Wandung (34) des Steckabschnitts (13) verbunden ist.

9. Riemenrad nach dem vorhergehenden Anspruch,
wobei das zumindest eine Federelement (40) an seinem Anbindungsabschnitt (41) sprungfrei in die Wandung (34) des Steckabschnitts (13) übergeht und/oder wobei das zumindest eine Federelement (40) von seinem Anbindungsabschnitt (41) zu seinem freien Ende (43) nach radialaußen eine Führungsfläche (42) bildet, durch welche das Federelement (40) mit einer vorbestimmten Kraft von der Primärstellung in die Sekundärstellung bringbar ist.

10. Riemenrad nach einem der vorhergehenden Ansprüche,
wobei das Riemenrad (10) hohlzylindrisch sowie in Axialrichtung zumindest einseitig offen ausgebildet ist und in seinem Inneren einen Aufnahmeraum (15) zur Aufnahme eines Radiallagers (5) bildet,
wobei der Aufnahmeraum (15) nach radialaußen vollständig geschlossen ist.
